# EUROPÄISCHE PATENTSCHRIFT

(11) **EP 2 129 447 B1**
(45) Veröffentlichungstag und Bekanntmachung des Hinweises auf die Patenterteilung: **05.10.2016**
(21) Anmeldenummer: 08734433.9
(22) Anmeldetag: 25.03.2008
(51) Int. Cl.: B01D 46/00

(54) **FILTERKOPFPLATTE**
FILTER HEAD PLATE
PLAQUE DE RECOUVREMENT DE FILTRE

(30) Priorität: 26.03.2007 DE 102007016037
(43) Veröffentlichungstag der Anmeldung: 09.12.2009
(73) Patentinhaber: PERGANDE Gesellschaft für industrielle Entstaubungstechnik mbH, 06369 Weissandt-Gölzau (DE)
(72) Erfinder: PERGANDE, Wilfried, 51109 Köln (DE); EULER, Klaus, 50667 Köln (DE)
(74) Vertreter: Fischer, Volker
(86) Internationale Anmeldenummer: PCT/DE2008/000503
(87) Internationale Veröffentlichungsnummer: WO 2008/128498

(56) Entgegenhaltungen:
- DE-C1- 4 334 699
- FR-A- 2 513 539
- US-A- 3 849 092

## Beschreibung

Die Erfindung betrifft eine Filterkopfplatte für einen Filter zur Entstaubung eines Gases, die ein oder mehrere Haltevorrichtungen für ein oder mehrere Filterelemente, wie Filterkerze, Filterpatrone, Filtertasche oder dergleichen sowie ein Flüssigkeitsleitungssystem zur Leitung einer Reinigungsflüssigkeit für die Reinigung der Filterelemente sowie der Filterkammer, aufweist.

Gattungsgemäße Filterkopfplatten sind beispielsweise in der DE 43 34 699, der FR 2 513 539 und der US 3 849 092 offenbart.

Bekannt sind Filterkopfplatten mit Haltevorrichtungen für Filterelemente, bei denen die Filterelemente über Schraubverbindungen oder mechanische Klemmvorrichtungen z.B. mit Federn und Flanschen gehalten und abgedichtet werden. Derartige Haltevorrichtungen sind meist stark strukturiert und daher aufwendig zu reinigen.

Bekannt sind ebenfalls an Filterkopfplatten angeordnete Flüssigkeitsleitungssysteme zur Leitung einer Reinigungsflüssigkeit für die Reinigung der Filterelemente sowie der Filterkammer. Die Flüssigkeitsleitungssysteme sind meist als unterhalb der Filterkopfplatte, d.h. in der Filterkammer angeordnete Rohr- oder Schlauchsysteme ausgeführt.

Derartige Flüssigkeitsleitungssysteme erfordern eine aufwendige Montage der einzelnen Rohr- bzw. Schlauchelemente mit entsprechenden Verbindungselementen und sind aufgrund ihrer stark strukturierten Oberfläche mit vielen verdeckten Flächenelementen, Ausnehmungen, Kanten und Hinterschneidungen ebenfalls nur mit erheblichem Aufwand zu reinigen.

Der besonders im Food- und Pharmabereich geforderte rückstandsfreie Betrieb einer Filteranlage-erfordert daher einen erheblichen Reinigungsaufwand, verbunden mit langen Stillstandszeiten des Filters.

Zweck der Erfindung ist die Bereitstellung einer Filterkopfplatte für einen Filter zur Entstaubung eines Gases, die Haltevorrichtungen für ein oder mehrere Filterelemente sowie ein Flüssigkeitsleitungssystem zur Leitung einer Reinigungsflüssigkeit für die Reinigung der Filterelemente sowie der Filterkammer aufweist und nur mit geringem Reinigungsaufwand einen rückstandsfreien Betrieb der Filteranlage ermöglicht. Dazu besteht die Aufgabe, eine Filterkopfplatte zu schaffen, die keine komplizierten in die Filterkammer ragenden Oberflächenstrukturen besitzt.

Diese Aufgabe wird durch eine Filterkopfplatte gemäß Anspruch 1 gelöst, die aus einer Oberplatte und einer Unterplatte mit zwischenliegenden Hohlraum besteht, wobei in der Filterkopfplatte mindestens eine Haltevorrichtung für ein Filterelement angeordnet ist und diese Haltevorrichtung aus einem äußeren Halteelement und einem inneren Halteelement besteht, wobei das äußere Halteelement in einer Öffnung der Filterkopfplatte angeordnet ist und eine Durchgangsöffnung zur Aufnahme des inneren Halteelementes besitzt. Im äußeren Halteelement ist eine die Durchgangsöffnung umgebende, mit druckbeaufschlagtem Gas aufblasbare Dichtung angeordnet. Das innere, am oberen Ende eines Filterelementes angeordnete Halteelement besitzt an der der Durchgangsöffnung des äußeren Halteelementes zugewandten Seite eine Gegenfläche, an der die aufblasbare Dichtung zur Anlage gebracht werden kann. Das druckbeaufschlagte Gas für das Aufblasen der Dichtung wird im Hohlraum der Filterkopfplatte geführt. Jede aufblasbare Dichtung steht mit dem Hohlraum der Filterkopfplatte so in Wirkverbindung, dass das druckbeaufschlagte Gas in die aufblasbare Dichtung einströmen kann, was zu deren Vergrößerung führt. Dadurch wird die aufblasbare Dichtung gegen die Gegenfläche des inneren Halteelementes gepresst und dichtet, hält und positioniert so das innere Halteelement mit dem daran angeordneten Filterelement im äußeren Halteelement, wodurch letztlich das Filterelement dicht in der Filterkopfplatte gehalten wird. Außerdem ist im Hohlraum der Filterkopfplatte ein Flüssigkeitsleitungssystem angeordnet, mit dem Reinigungsflüssigkeit zu an der Filterkopfplatte angeordneten, in die Filterkammer ragenden Düsen geleitet werden kann.

Bei einer bevorzugten Ausgestaltung der Erfindung ist der Hohlraum in der Filterkopfplatte zweigeteilt, wobei ein Teilhohlraum zur Leitung des druckbeaufschlagten Gases zu der oder den auflasbaren Dichtungen verwendet wird, während der zweite Teilhohlraum die Reinigungsflüssigkeit führt und diese zu den in die Filterkammer ragenden Düsen leitet. Beide Teilhohlräume besitzen jeweils außerhalb der Filterkammer, bevorzugt in der Oberplatte, angeordnete Anschlusselemente zur Einleitung von druckbeaufschlagtem Gas bzw. Reinigungsflüssigkeit.

Selbstverständlich kann der Hohlraum zwischen der Oberplatte und der Unterplatte der Filterkopfplatte auch in mehr als zwei Teilhohlräume unterteilt werden, wenn beispielweise ein drittes Medium geführt werden soll oder wenn eine gruppenweise Ansteuerung mehrer aufblasbarer Dichtungen gewünscht ist.

Dies kann beispielsweise der Fall sein, wenn die Filterkopfplatte selbst mittels einer aufblasbaren Dichtung gegenüber dem Filtergehäuse abgedichtet, positioniert und gehalten wird. Dazu wird an der äußeren, der Gehäusewand der Filterkammer zugewandten Außenkante der Filterkopfplatte eine aufblasbare Dichtung angeordnet, die durch Aufblasen dicht an der Gehäusewand der Filterkammer zur Anlage gebracht wird. Diese aufblasbare Dichtung kann entweder gemeinsam mit den in den Haltevorrichtungen der Filterelemente angeordneten aufblasbaren Dichtungen oder getrennt davon betrieben, d.h. mit druckbeaufschlagtem Gas befüllt oder entleert werden. Eine separate Ansteuerung kann entweder wie vorstehend beschrieben über einen weiteren Teilhohlraum oder über ein separates Leitungssystem erfolgen. Dieses separate Leitungssystem kann im Hohlraum zwischen der Oberplatte und der Unterplatte der Filterkopfplatte angeordnet sein.

Bei einer anderen bevorzugten Ausgestaltung der Erfindung ist innerhalb des Hohlraumes ein Leitungssystem angeordnet. Wird der Hohlraum zur Leitung des druckbeaufschlagten Gases zu der oder den aufblasbaren Dichtungen verwendet, so dient das innerhalb des Hohlraumes angeordnete Leitungssystem der Leitung der Reinigungsflüssigkeit.
Selbstverständlich ist auch eine umgekehrte Zuordnung des Hohlraumes und des im Hohlraum angeordneten Leitungssystems möglich, nämlich, dass die Reinigungsflüssigkeit im Hohlraum zwischen der Oberplatte und der Unterplatte zu den in die Filterkammer ragenden Düsen geleitet wird und das druckbeaufschlagte Gas mittels des Leitungssystems zu den aufblasbaren Dichtungen geführt wird.

Die in die Filterkammer ragenden Düsen zum Versprühen von Reinigungsflüssigkeit sind bei einer bevorzugten Ausgestaltung der Erfindung ausrichtbar angeordnet. Sie können entweder direkt in der Unterplatte der Filterkopfplatte angeordnet sein oder sich an speziellen richtbaren Schlauch- oder Rohrelementen befinden. Die Ausrichtung der Düsen wird so erfolgen, dass die Reinigungsflüssigkeit sowohl die Filterelemente als auch die Innenwände der Filterkammer benetzt, so dass Staub- und Partikelablagerungen in der Filterkammer gelöst und entfernt werden können.

Die Ausgestaltung der Filterkopfplatte als doppelwandige Platte mit dazwischenliegendem Hohlraum und der vorstehend beschriebenen Anordnung der Haltevorrichtungen für Filterelemente mit aufblasbaren Dichtungen sowie der Anordnung eines Leitungssystems für Reinigungsflüssigkeit in dem Hohlraum der Filterkopfplatte stelllt eine überraschend einfache und zur Lösung der Aufgabe der Erfindung höchst vorteilhafte Lösung dar. Durch die Erfindung werden stark strukturierte Oberflächen mit vielen verdeckten Flächenelementen, Ausnehmungen, Kanten und Hinterschneidungen in der Filterkammer vermieden. Dadurch kann die Reinigung der Filterkammer besonders einfach und zuverlässig erfolgen.
Die Erfindung soll nachfolgend anhand eines Ausführungsbeispieles weiter beschrieben werden, ohne die Erfindung dadurch einzuschränken.

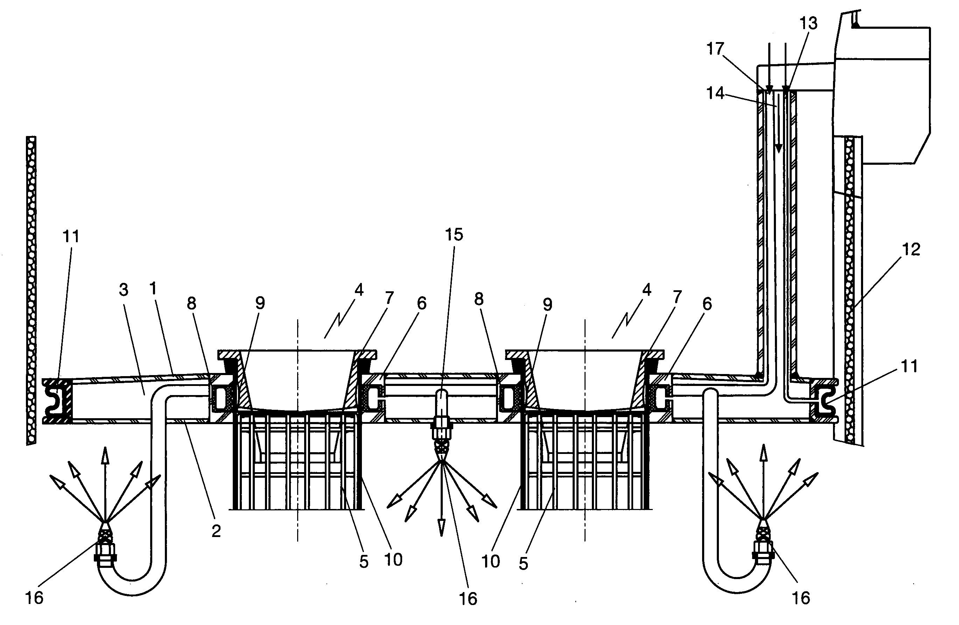

Die zugehörige Zeichnung zeigt eine erfindungsgemäße Filterkopfplatte mit zwei Haltevorrichtungen für Filterelemente und in die Filterkammer weisende Düsen zum Versprühen von Reinigungsflüssigkeit.
Wie die Figur zeigt, besteht die Filterkopfplatte aus einer Oberplatte 1 und einer Unterplatte 2 mit einem dazwischenliegenden Hohlraum 3. In Öffnungen der Filterkopfplatte sind Haltevorrichtungen 4 für Filterelemente 5 angeordnet. Die Haltevorrichtungen 4 bestehen aus einem äußeren Halteelement 6 und einem inneren Halteelement 7. Das äußere Halteelement 6 ist in einer Öffnung der Filterkopfplatte angeordnet und so bemessen, dass seine Höhe der Dicke der Filterkopfplatte entspricht. Es weist eine Durchgangsöffnung zur Aufnahme des inneren Halteelementes 7 auf. Die Durchgangsöffnung umspannend ist im äußeren Halteelement 6 eine aufblasbare Dichtung 8 angeordnet, die so mit dem Hohlraum 3 zwischen der Oberplatte 1 und der Unterplatte 2 in Wirkverbindung steht, dass bei Einleitung eines druckbeaufschlagten Gases in diesen Hohlraum 3 die Dichtung 8 aufgeblasen wird. Am inneren Halteelement 7 ist das Filterelement 5 angeordnet, und zwar derart, dass das Filterelement 5 in die Filterkammer ragt, wenn das innere Halteelement 7 in die Durchgangsöffnung des äußeren Halteelementes 6 eingesetzt ist. Das innere Halteelement 7 besitzt eine Gegenfläche 9, die gegenüber der aufblasbaren Dichtung 8 angeordnet ist. Um das Filterelement 5 ist ein Filterschlauch 10 angeordnet, dessen oberer Rand sich zwischen innerem und äußerem Halteelement 7, 6 befindet. An der Oberplatte 1 der Filterkopfplatte ist ein Gasanschluss 14 angebracht, durch den ein druckbeaufschlagtes Gas in den Hohlraum 3 eingeleitet werden kann.

Werden die Dichtungen 8 aufgeblasen, drücken sie den Filterschlauch 10 dicht gegen die Gegenfläche 9. Das innere Halteelement 7 wird abgedichtet im äußeren Halteelement 6 gehalten und letztlich so das Filterelement 5 in der Filterkopfplatte abgedichtet gehalten sowie sicher positioniert und zentriert. Bei Druckentlastung der Dichtungen 8 werden die inneren Halteelemente 7 freigegeben, so dass die Filterelemente 5 entnommen bzw. ausgetauscht werden können.
Am äußeren Rand der Filterkopfplatte ist diese umspannend eine weitere aufblasbare Dichtung 11 angeordnet, die die Filterkopfplatte gegenüber dem Gehäuse 12 der Filterkammer abdichtet. Zu dieser Dichtung 11 führt ein separates Leitungssystem 13 zur Einleitung eines druckbeaufschlagten Gases.
Im Hohlraum 3 zwischen der Oberplatte 1 und der Unterplatte 2 ist weiterhin ein Leitungssystem 15 angeordnet, an welches in der Unterplatte 2 direkt oder über Rohrelemente angeordnete Düsen 16 angeschlossen sind. Die Düsen 16 ragen in die Filterkammer und sind innerhalb der Filterkammer ausrichtbar. Das Leitungssystem 15 verfügt über einen oberhalb der Filterkopfplatte angeordneten Anschluss 17. Durch dieses Leitungssystem wird bei Bedarf Reinigungsflüssigkeit zu den Düsen 16 geleitet und innerhalb der Filterkammer versprüht.

Alle Leitungssyteme 13,15 sind mit den zugehörigen Anschlüsse für druckbeaufschlagtes Gas 14 und Reinigungsflüssigkeit 17 an einer Position zusammengeführt. Die Filterkopfplatte mit den darin angeordneten Systemen zur Abdichtung und Halterung der Filterelemente 5 sowie zum Versprühen von Reinigungsflüssigkeit in der Filterkammer weist an der der Filterkammer zugewandten Seite keine strukturierten Flächenelemente auf, besitzt keine Ausnehmungen und weist kaum verdeckte Flächenelemente und Hinterschneidungen auf.

Die Filterelemente 5 können unproblematisch entnommen bzw. ausgetauscht werden.

Darüber hinaus ermöglicht die erfindungsgemäße Anordnung einer aufblasbaren Dichtung 11 am äußeren rand der Filterkopfplatte eine werkzeugfreie Entnahme der kompletten Filterkopfplatte. Die Innenwände der Filterkammer weisen keine Vorsprünge auf. Beides bewirkt, dass eine gründliche Komplettreinigung der Filterkammer mit geringem Aufwand erfolgen kann und so mit geringem Aufwand und einfachen Mitteln ein rückstandsfreier Betrieb der Filteranlage ermöglicht wird.

### Liste der verwendeten Bezugszeichen

- 1: Oberplatte
- 2: Unterplatte
- 3: Hohlraum
- 4: Haltevorrichtung
- 5: Filterelement
- 6: äußeres Halteelement
- 7: inneres Halteelement
- 8: aufblasbare Dichtung
- 9: Gegenfläche
- 10: Filterschlauch
- 11: Dichtung
- 12: Gehäuse
- 13: Leitungssystem
- 14: Gasanschluss
- 15: Leitungssystem
- 16: Düse
- 17: Anschluss

## Patentansprüche

1. Filterkopfplatte für einen Filter zur Entstaubung eines Gases, bestehend aus einer Oberplatte (1) und einer Unterplatte (2) mit einem zwischenliegenden Hohlraum (3), mindestens einer Haltevorrichtung (4) für mindestens einen Filterschlauch (10), wobei die Haltevorrichtung (4) aus einem am offenen Ende des Filterschlauches (10), dessen Öffnung an der radialen Innenseite des Filterschlauchs (10) umgebend angeordneten inneren Halteelement (7) mit einer radial nach außen weisenden Gegenfläche (9), einem äußeren Halteelement (6) mit einer Durchgangsöffnung zur Aufnahme des inneren Halteelementes (7) und einer zwischen beiden Halteelementen (6, 7) angeordneten mit druckbeaufschlagtem Gas aufblasbaren Dichtung (8) besteht, wobei der Filterschlauch (10) zwischen dem inneren Halteelement (7) und dem äußeren Haltelement (6) platziert ist und die aufblasbare Dichtung (8) den Filterschlauch (10) gegen die Gegenfläche (9) drückt, einem Leitungssystem zur Leitung eines druckbeaufschlagten Gases zur aufblasbaren Dichtung (8) und einem Flüssigkeitsleitungssystem (15) zur Leitung einer Reinigungsflüssigkeit für die Reinigung des Filterschlauches (10),
**dadurch gekennzeichnet, dass**
das äußere Halteelement (6) in einer die Oberplatte (1) und die Unterplatte (2) der Filterkopfplatte durchgreifenden Öffnung angeordnet ist, so dass die Durchgangsöffnung des äußeren Halteelementes (6) eine Durchgangsöffnung durch die Filterkopfplatte bildet, die aufblasbare Dichtung (8) am äußeren Halteelement (6) die Durchgangsöffnung umgebend angeordnet ist und eine Verbindung zu dem zur Leitung des druckbeaufschlagten Gases ausgebildeten Hohlraum (3) besitzt und das Flüssigkeitsleitungssystem (15) zur Leitung einer Reinigungsflüssigkeit im Hohlraum (3) der Filterkopfplatte angeordnet ist.

2. Filterkopfplatte nach Anspruch 1,
**dadurch gekennzeichnet, dass**
der Hohlraum (3) zwischen der Oberplatte (1) und der Unterplatte (2) der Filterkopfplatte zweigeteilt ausgeführt ist, wobei jeder Teilhohlraum ein äußeres Anschlusselement aufweist und ein Teilhohlraum mit den in den äußeren Halteelementen (6) angeordneten auflasbaren Dichtungen (8) verbunden ist, während der andere Teilhohlraum mit in die Filterkammer ragenden Düsen (16) zum Versprühen der Reinigungsflüssigkeit verbunden ist.

3. Filterkopfplatte nach Anspruch 1,
**dadurch gekennzeichnet, dass**
der Hohlraum (3) mit in die Filterkammer ragenden Düsen (16) zum Versprühen der Reinigungsflüssigkeit verbunden ist und dass im Hohlraum (3) ein Leitungssystem zur Leitung des druckbeaufschlagten Gases zu den in den äußeren Halteelementen (6) angeordneten aufblasbaren Dichtungen (8) angeordnet ist.

4. Filterkopfplatte nach einem der vorgenannten Ansprüche,
**dadurch gekennzeichnet, dass**
an der äußeren, der Gehäusewand (12) der Filterkammer zugewandten Außenkante der Filterkopfplatte eine aufblasbare Dichtung (11) angeordnet ist, die durch Aufblasen dicht an der Gehäusewand (12) der Filterkammer zur Anlage gebracht werden kann.

5. Filterkopfplatte nach Anspruch 4,
**dadurch gekennzeichnet, dass**
die an derAußenkante der Filterkopfplatte angeordnete aufblasbare Dichtung (11) zwischen der Oberplatte (1) und der Unterplatte (2) der Filterkopfplatte angeordnet ist und mit dem das druckbeaufschlagte Gas führenden Hohlraum (3) der Filterkopfplatte oder einem Leitungssytem (13) verbunden ist.

6. Filterkopfplatte nach einem der vorgenannten Ansprüche,
**dadurch gekennzeichnet, dass**
die Düsen (16) zum Versprühen der Reinigungsflüssigkeit ausrichtbar angeordnet sind.

## Claims

1. Filter head plate for a filter for dedusting a gas, comprising an upper plate (1) and a lower plate (2) with an intermediate cavity (3), at least one retaining device (4) for at least one filter hose (10), wherein the retaining device (4) comprises an inner retaining element (7) which is arranged on the open end of the filter hose (10) so as to surround its opening on the radial inner side of the filter hose (10) and has a radially outwardly directed mating surface (9), an outer retaining element (6) with a through-opening for receiving the inner retaining element (7), and a seal (8) which is arranged between the two retaining elements (6, 7) and can be inflated by pressurized gas, wherein the filter hose (10) is placed between the inner retaining element (7) and the outer retaining element (6) and the inflatable seal (8) presses the filter hose (10) against the mating surface (9), a line system for conducting a pressurized gas to the inflatable seal (8) and a liquid line system (15) for conducting a cleaning liquid for cleaning the filter hose (10),
**characterized in that**
the outer retaining element (6) is arranged in an opening which passes through the upper plate (1) and the lower plate (2) of the filter head plate, with the result that the through-opening in the outer retaining element (6) forms a through-opening through the filter head plate, the inflatable seal (8) is arranged on the outer retaining element (6) so as to surround the through-opening and has a connection to the cavity (3), which cavity is designed to conduct the pressurized gas, and the liquid line system (15) for conducting a cleaning liquid is arranged in the cavity (3) of the filter head plate.

2. Filter head plate according to Claim 1,
**characterized in that**
the cavity (3) between the upper plate (1) and the lower plate (2) of the filter head plate is configured to be divided in two parts, wherein each part cavity has an outer connection element and one part cavity is connected to the inflatable seals (8) arranged in the outer retaining elements (6) whereas the other part cavity is connected to nozzles (16) for spraying the cleaning liquid that project into the filter chamber.

3. Filter head plate according to Claim 1,
**characterized in that**
the cavity (3) is connected to nozzles (16) for spraying the cleaning liquid that project into the filter chamber and **in that** the cavity (3) has arranged therein a line system for conducting the pressurized gas to the inflatable seals (8) arranged in the outer retaining elements (6).

4. Filter head plate according to one of the preceding claims,
**characterized in that**
an inflatable seal (11) is arranged on the outer outside edge of the filter head plate that faces the housing wall (12) of the filter chamber and, as a result of inflation, can be brought about tightly against the outer wall (12) of the filter chamber.

5. Filter head plate according to Claim 4,
**characterized in that**
the inflatable seal (11) arranged on the outside edge of the filter head plate is arranged between the upper plate (1) and the lower plate (2) of the filter head plate and is connected to the cavity (3) of the filter head plate that guides the pressurized gas or to a line system (13).

6. Filter head plate according to one of the preceding claims,
**characterized in that**
the nozzles (16) for spraying the cleaning liquid are arranged such that they can be oriented.

## Revendications

1. Plaque de recouvrement de filtre pour un filtre destiné au dépoussiérage d'un gaz, constituée d'une plaque supérieure (1) et d'une plaque inférieure (2) avec une cavité intermédiaire (3),
d'au moins un dispositif de maintien (4) pour au moins une manche filtrante (10), sachant que le dispositif de maintien (4) est constitué d'un élément de maintien intérieur (7), disposé à l'extrémité ouverte de la manche filtrante (10) en entourant son ouverture sur le côté intérieur radial de la manche filtrante (10) et doté d'une contre-surface (9) dirigée radialement vers l'extérieur, d'un élément de maintien extérieur (6) doté d'une ouverture débouchante pour recevoir l'élément de maintien intérieur (7), et d'un joint d'étanchéité (8) disposé entre les deux éléments de maintien (6, 7) et pouvant être gonflé par du gaz mis sous pression, sachant que la manche filtrante (10) est placée entre l'élément de maintien intérieur (7) et l'élément de maintien extérieur (6) et que le joint d'étanchéité gonflable (8) presse la manche filtrante (10) contre la contre-surface (9),
d'un système de conduites pour conduire un gaz mis sous pression vers le joint d'étanchéité gonflable (8) et d'un système de conduites de liquide (15) pour conduire un liquide de nettoyage pour le nettoyage de la manche filtrante (10), **caractérisée en ce que** l'élément de maintien extérieur (6) est disposé dans une ouverture traversant la plaque supérieure (1) et la plaque inférieure (2) de la plaque de recouvrement de filtre, de sorte que l'ouverture débouchante de l'élément de maintien extérieur (6) forme une ouverture de passage à travers la plaque de recouvrement de filtre, le joint d'étanchéité gonflable (8) est disposé sur l'élément de maintien extérieur (6) en entourant l'ouverture débouchante et possède une liaison vers la cavité (3) formée pour conduire le gaz mis sous pression, et le système de conduites de liquide (15) destiné à conduire un liquide de nettoyage est disposé dans la cavité (3) de la plaque de recouvrement de filtre.

2. Plaque de recouvrement de filtre selon la revendication 1, **caractérisée en ce que** la cavité (3) entre la plaque supérieure (1) et la plaque inférieure (2) de la plaque de recouvrement de filtre est réalisée en deux parties, sachant que chaque cavité partielle présente un élément de raccordement extérieur et qu'une cavité partielle est reliée aux joints d'étanchéité gonflables (8) disposés dans les éléments de maintien extérieurs (6), tandis que l'autre cavité partielle est reliée à des buses (16) faisant saillie dans la chambre de filtration pour pulvériser le liquide de nettoyage.

3. Plaque de recouvrement de filtre selon la revendication 1, **caractérisée en ce que** la cavité (3) est reliée à des buses (16) faisant saillie dans la chambre de filtration pour pulvériser le liquide de nettoyage, et **en ce qu'**un système de conduites destiné à conduire le gaz mis sous pression vers les joints d'étanchéité gonflables (8) disposés dans les éléments de maintien extérieurs (6) est disposé dans la cavité (3).

4. Plaque de recouvrement de filtre selon l'une des revendications précédentes,
**caractérisée en ce qu'**un joint d'étanchéité gonflable (11) est disposé sur le bord extérieur, tourné vers la paroi de boîtier (12) de la chambre de filtration, de la plaque de recouvrement de filtre, joint qui, en étant gonflé, peut être amené en application étanche contre la paroi de boîtier (12) de la chambre de filtration.

5. Plaque de recouvrement de filtre selon la revendication 4, **caractérisée en ce que** le joint d'étanchéité gonflable (11) disposé sur le bord extérieur de la plaque de recouvrement de filtre est disposé entre la plaque supérieure (1) et la plaque inférieure (2) de la plaque de recouvrement de filtre, et est relié à la cavité (3) de la plaque de recouvrement de filtre qui conduit le gaz mis sous pression, ou à un système de conduites (13).

6. Plaque de recouvrement de filtre selon l'une des revendications précédentes,
**caractérisée en ce que** les buses (16) destinées à pulvériser le liquide de nettoyage sont disposées de manière orientable.
